# EUROPEAN PATENT APPLICATION

(11) **EP 4 560 978 A1**
(43) Date of publication of application: **28.05.2025**
(21) Application number: 23212180.6
(22) Date of filing: 27.11.2023
(51) Int. Cl.: H04L 9/40, H04W 12/106, H04W 12/12

(54) **WITNESS DEVICE DISCOVERY BASED ON DATA CORRELATION**

(71) Applicant: Koninklijke Philips N.V., 5656 AG Eindhoven (NL)
(72) Inventor: CRONIN, Harry Michael, Eindhoven (NL); WALKER, Nicholas Simon, Eindhoven (NL); MCDONALD, Rory Andrew Bruce, Eindhoven (NL); GARCIA MORCHON, Oscar, Eindhoven (NL)
(74) Representative: Philips Intellectual Property & Standards

(57) **Abstract**

The invention proposes a system and method for recruiting or creating one or more witness devices such that their recent past sensing data has maximum expected correlation to a sensed parameter of importance (e.g., an event's data stream) as recorded by a primary sensor and/or to sub-sets of an overall data stream which are important for models. Thereby, robustness can be increased in situations where a model relies on some unknown combination of data from different sensors, or where there is a risk of eavesdropping by falsely requesting witness data, or where no direct witness device is available and a combination of inputs from several devices is required.

## Description

### FIELD OF THE INVENTION

The invention relates to the field of data verification in wireless networks, such as - but not limited to - Internet of Things (IoT) networks, wireless networks (e.g., Wi-Fi^{™™}) or cellular (e.g., 3GPP) networks.

### BACKGROUND OF THE INVENTION

Wearable devices with wireless sensors have profoundly improved patients experience of interacting with remote healthcare providers. They facilitate remote healthcare monitoring given their capability in automatic measurement of medical signs and periodic transmission of data over the Internet.

Any discrepancy in data, between what is transmitted by a wireless sensor (e.g., wearable Internet of Things (IoT) sensor) and what is received by the healthcare system or other data destination, warrants further investigation to check whether data is forged or has been tampered with. Therefore, obtaining a local version of data (i.e., transmitted by wireless sensors) is important for verification. Neighboring nodes (those sharing a wireless broadcast domain with the target IoT sensor) can potentially act as "witnesses" that provide such a local version of transmitted data. The witnesses are wireless devices that overhear data packets transmitted by the wireless sensor and/or observe the same underlying event, and hence can record the local version of the data whenever needed (on-demand witnessing).

Thus, wireless sensors in an environment (within close proximity) can be used to statically overhear and record a fingerprint of other sensors' data, allowing a forensic expert to verify data transmitted from the sensors retrospectively.

In conventional verification systems, witnessing functions are quite basic (e.g., radio frequency (RF) eavesdropping) and the witness device selection process is also straightforward (e.g., simply based on co-location to a primary device). Furthermore, little consideration is given to privacy issues caused by allowing requests for witness data.

However, verification of data generated by wearable sensors is increasingly becoming of concern, particularly to health service providers and insurance companies. There is a need for a verification framework by which various authorities can request a verification service for the local network data of a target IoT device.

### SUMMARY OF THE INVENTION

It is an object of the present invention to provide an improved verification approach for wireless data generating devices.

This object is achieved by an apparatus as claimed in claim 1, by a hub as claimed in claim 11, by a system as claimed in claim 12, by a method as claimed in claim 13, and by a computer program product as claimed in claim 15.

According to a first aspect related e.g. to a controller of a hub, an apparatus is provided for enabling a witness device used for verifying input data derived from a primary data generating device or from an analysis by a model, the apparatus being adapted to select the witness devices from potential data generating devices based on a degree of correlation between witness data generated by the potential data generating devices and the input data during a predetermined look-back time period.

According to a second aspect, a hub comprising an apparatus of the first aspect is provided.

According to a third aspect, a system for testing devices and/or models based on requesting witness devices from the hub of the second aspect is provided.

According to a fourth aspect, a method is provided for selecting witness devices for verifying input data derived from a primary data generating device, the method comprising selecting the witness devices from potential data generating devices based on a degree of correlation between witness data generated by the potential data generating devices and the input data during a predetermined look-back time period.

Finally, according to a fifth aspect, a computer program product is provided, which comprises code means for producing the steps of the method of the fourth aspect when run on a computer device.

Accordingly, witness devices can be discovered and selected among a network of devices to witness an event, even where witnessing that event would require one of more of coordinated data from several witness devices, witness devices that operate in a non-standard mode, unclear data to witness the event (especially where that event has been processed by a machine learning model). This may equally apply to testing or calibrating third party devices as well as witnessing discrete events.

Furthermore, data from multiple witness devices can be combined to, e.g., increase reliability of the system.

Additionally, potential witness devices can be recruited under additional consideration of their ability to accurately sense data relating to the event to be witnessed. As a result, witness devices can be discovered in a network of heterogeneous sensors, where each sensor may only have a 'partial' view of the event, or sense differing modalities, events of complex type (such as those used within machine learning models) can be witnessed, where it will not be obvious which single, fixed witness device is indeed relevant and/or robust privacy provisions can be included, such as ensuring that the requester of witness data also themselves witnessed the event in question (to avoid eavesdropping).

According to a first option which may be combined with any of the above first to fifth aspects, the apparatus may comprise a model analysis module adapted to derive the input data from an analysis of a computed or modelled output, in particular an output produced by a machine learning model.

According to a second option which may be combined with the first option or any of the above first to fifth aspects, the model analysis module may be configured to analyze models to produce an estimated event that has caused a given decision and to obtain or simulate sensing data which would have constituted the event.

According to a third option which can be combined with the first or second option or any of the above first to fifth aspects, the model analysis module may be adapted to produce an estimate of a raw sensor data input or a combination of raw sensor data inputs, that produced the computed or modelled output.

According to a fourth option which can be combined with any of the first to third options or any of the above first to fifth aspects, the witness devices may be selected (e.g., by the apparatus) such that their past witness data during the predetermined look-back time period has a maximum expected correlation to an event's data stream as recorded by the primary data generating device , or one or more sub-sets of an overall data stream, which are important for the model.

According to a fifth option which can be combined with any of the first to fourth options or any of the above first to fifth aspects, witness data generated by the selected witness devices may be analyzed (e.g., by the apparatus) over an upcoming time period to check a correct functioning of the primary data generating device or a target model.

According to a sixth option which can be combined with any of the first to fifth options or any of the above first to fifth aspects, virtual sensors may be created (e.g., by the apparatus) by grouping sensing data from several physical sensors, which sense aspects of a shared event, and using data fusion techniques.

According to a seventh option which can be combined with any of the first to sixth options or any of the above first to fifth aspects, a user may be requested (e.g., by the apparatus) to configure for a new data generating device one or more of a type of device, a type of sensor or sensors that is/are available in the new data generating device, a type of data outputs that are available in the new data generating device, and an applicable context for sharing or receiving data outputs.

According to an eighth option which can be combined with any of the first to seventh options or any of the above first to fifth aspects, metadata may be received or extracted or estimated (e.g., by the apparatus), wherein the metadata include one or more of a location of the primary data generating device and its estimated sensing range, sensing parameters, and an estimated type or nature of an event to be witnessed and/or its time-position in a data stream of the input data.

According to a ninth option which can be combined with any of the first to eighth options or any of the above first to fifth aspects, the potential data generating devices may be identified (e.g., by the apparatus) by one or more of their approximate location and sensing range, their sensing type, their configuration data, their permission to act as witness devices, and their availability to act as witness devices during the look-back period.

According to a tenth option which can be combined with any of the first to ninth options or any of the above first to fifth aspects, correlations between the witness data of the potential data generating devices and the input data may be calculated on a level of an individual device or a level of a group of devices; potential data generating devices or combinations of potential data generating devices may be selected as the witness devices; the selected witness devices may be instructed to maintain their settings for an upcoming witnessing time period; and data obtained from the selected witness devices during the predetermined look-back time period and the witnessing time period may be outputted via a user interface or a database.

It is noted that the above apparatus may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatus of claim 1, the hub of claim 11, the system of claim 12, the method of claim 13, and the computer program product of claim 15 may have similar and/or identical preferred embodiments, in particular, as defined in the dependent claims.

It shall further be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 schematically shows a summarizing architecture of a witness device discovery system according to various embodiments;
Fig. 2 schematically shows a process flow diagram of witness device discovery using the architecture of Fig. 1;
Fig. 3 schematically shows a flow diagram of a procedure for configuring a sensor in a sensor network according to various embodiments; and
Fig. 4 schematically shows a flow diagram of procedure for witnessing a defined primary sensor according to first and second embodiments; and
Fig. 5 schematically shows an exemplary use case of a witness device discovery process according to an embodiment.

### DETAILED DESCRIPTION OF EMBODIMENTS

Embodiments of the present invention are described below based on an IoT network or a 5G cellular network environment.

Throughout the present disclosure, a "hub" is to be understood as a connection point or network device that serves as place of convergence for data from one or more devices and then forwards the data in one or more other directions. It may have a built-in switch, which maintains the information necessary to determine how and where data is to be forwarded. In a smart home environment, an associated smart home app may act as a "universal remote" for all smart home devices, allowing the owner to monitor elements of the smart home network and automate, schedule and control tasks. Smart home hubs may be able to control many smart home and/or IoT-enabled devices and systems, including smart sensors on thermostats, lightbulbs, outlets and switches, door locks and sensors, doorbells, garage door openers, energy monitors, and window treatments/coverings and sensors. They can also control motion sensors, flood and leak sensors, smart radios and speakers, security systems and cameras, smoke and carbon monoxide detectors, irrigation controllers, and fans, water heaters and other household appliances. It should be understood that the `home' situation may be generalised to any situation where a hub may be used, including, but not limited to, medical facilities, commercial, industrial and other public spaces.

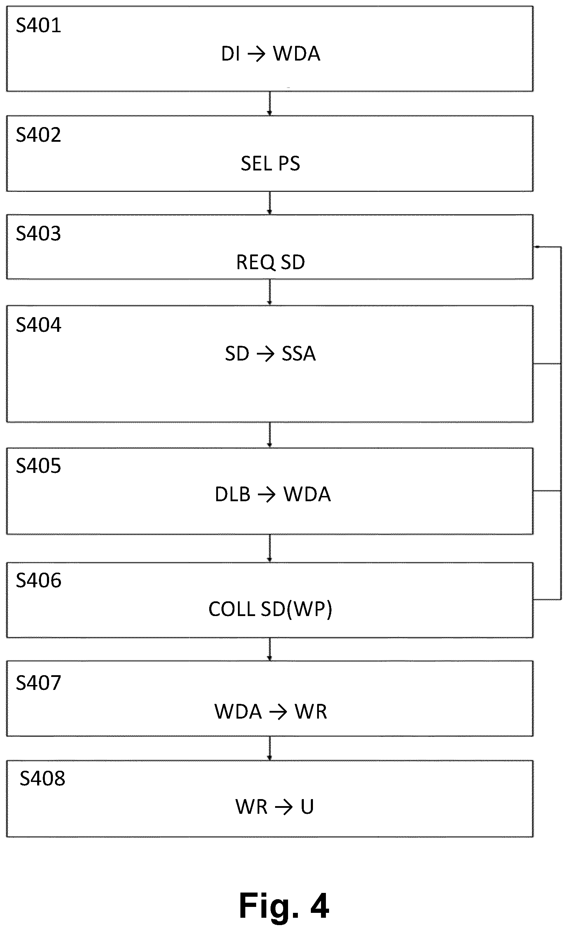

Moreover, an "event" is to be understood as a physical occurrence which is sensed by a primary device and/or derived from analysis of a model which operates on data from one or more primary devices. Such a "model" may be any model external to the concerned system, which operates on data from sensors within the concerned system (network) to produce a computed result. In the sense that it operates on data from the sensors, it may be considered 'downstream'. Examples are machine learning models which may analyze data streams from one or more sensors to produce a decision (such as a digital biomarker model described in connection with the use case of Fig. 4).

Further, "witness devices" are to be understood as devices that can sense one or more parameters relevant to an event, those parameters having also been sensed by at least one primary device, to produce "witness data". The sensing (and therefore the witness data) need not be based on the same sensing modality or type as used by the primary device. A group of several sensors may act together to constitute a single (virtual) witness device with their witness data subject to data fusion.

Further, a "witnessing period" is to be understood as a time period after discovery of a witness device, over which witness data of the witness device is compared to data obtained from the primary device. This period may contain several events. The length of the witnessing period may be subject to a system policy or may be requested by the primary device (especially, where it requires a testing function).

Further, a "look-back period" is to be understood as a time period prior to an event (or for an ongoing sensing, prior to receipt of a sensing request), over which data from witness devices would be expected to correlate with data from a primary device if they have sensed the same event. This period will depend on temporal dynamics of the event and may be set dynamically or subject to a system policy.

Witness devices are a useful feature of device or sensor networks, in which an external or third-party device can be recruited to sense some data relevant to an event which is sensed by a primary device. In the following embodiments, the basic concept of witness devices is applied to wearables sensing data, wherein the witness device may check whether a primary wearable device has initiated an RF transmission at a plausible time and may select one or more witness devices under restricted conditions (e.g., where simple, deterministic algorithms operate on the primary device's data). Other applications may include wireless networks such as WiFi or cellular networks. In particular, in a cellular network a base station such as a 5G gNB may act as the "hub" and user equipment (UE) devices may act as "witness devices".

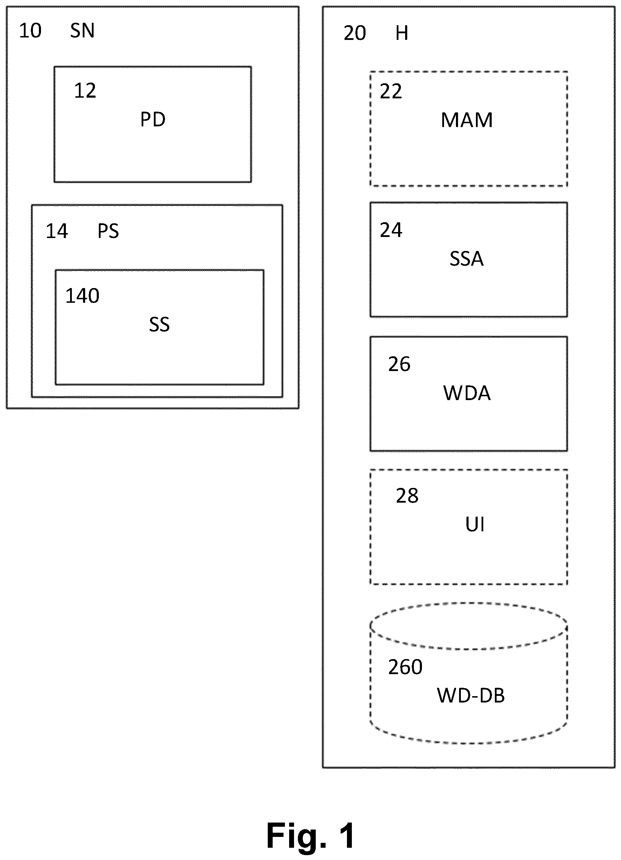

Fig. 1 schematically shows a summarizing architecture of a witness device discovery system according to various embodiments.

It should be noted that throughout the present disclosure only those blocks, components and/or devices that are relevant for understanding the proposed data distribution function are shown in the accompanying drawings. Other blocks have been omitted for reasons of brevity. Furthermore, blocks designated by same reference numbers are intended to have the same or at least a similar function, so that their function is not described again later.

A sensor network (SN) 10 comprises a plurality of sensors 12, 14 configured to collect data from an event (e.g., scene) and provide network connections to a hub (H) 20 and optionally to each other and/or "external" sensors from other sensor networks (e.g., adjacent sensor networks). The sensing function of these sensors 12, 14 may be their primary function (e.g., a microphone which senses sounds) or may be a secondary function derived by operating their hardware in a specific sensing mode (e.g., sensing the presence of a person using RF/Wi-Fi^{™} signals from a communications device).

The plurality of sensors 12, 14 can be divided into several sub-sets including primary devices (PD) 12 (e.g., one or more sensors that collect data requiring a witness device), potential sensors (PS) 14 (e.g., sensors that have been identified as possible witness devices by the hub 20 after its initial filter operation (e.g., as described in connection with the procedure of Fig. 4), and selected sensors (SS) 140 (e.g., sensors that have been selected from the potential sensors 14 by a sensor selection algorithm (SSA) 24 provided e.g. by the hub 20 (e.g., as described in connection with the procedure of Fig. 4). The selected sensors 140 may be temporarily operated in a non-standard mode (e.g., a high energy-consumption sensing mode).

In an example, a device may comprise multiple sensors generating multiple data outputs. For instance, a device may include both a camera and a microphone. A device may also comprise a single sensor (e.g., a camera) that may also generate multiple data outputs (e.g., video in standard definition and video in high definition). A device may also comprise a wireless interface used for wireless communication and/or sensing. Thus, throughout the present disclosure, the term "sensor" or "device" may also refer to one or more data generating devices with one or more respective data outputs.

In an example, the sensor network 10 may also be implemented as a combination of multiple "independent" networks whose devices can cooperate with each other, despite of being in different "independent" networks (e.g., belonging to different users, having a different personal area network identifier (PAN ID), having a different Wi-Fi^{™} service set identifier (SSID), etc.). For instance, a first user may have a first sensor (e.g., a Wi-Fi^{™} camera in a first Wi-Fi^{™} network) and a second nearby user may have a second sensor (e.g., a Wi-Fi^{™} camera in a second Wi-Fi^{™} network) and output data of the second sensor may be used as witness information for the first sensor. For instance, it may refer to two (adjacent) wireless access devices such as two 5G base stations providing (wireless communication/sensing) services to multiple UEs.

Furthermore, the hub 20 may be comprise or be configured as a central controller within a network that has communications and control links with a plurality of other devices on the network, as well as the necessary computing hardware to process and store input data. An example would be a physical hub device within an IoT network, or a cloud service implementing the same functionality.

In an example, the hub 20 may be implemented as or may comprise an optional user interface (UI) 28 for allowing user interaction.

The hub 20 may be implemented as a single device or may be a distributed system consisting of multiple devices. The hub 20 may be a smart device such as a smart phone or tablet or it may be integrated with such a smart device, e.g., by interacting with software running on the smart device where the software may run either in the operating system (e.g., iOS, Android, etc.) or in an application.

In embodiments, the hub 20 may contain or access one or more of a model analysis module (MAM) 22, the above-mentioned sensor selection algorithm 24, a witness device algorithm (WDA) 26, a witness device database (WD-DB) 260 for (persistently) storing discovered witness devices for future witnessing purposes of similar events, and a privacy and/or user consent module (e.g., provided in or by the user interface 28) for configuring privacy and/or user consent settings associated to a device and/or a device data output so that the device and/or the device data output may be used in the system.

The model analysis module 22 may be configured as a software module (as described in the below second embodiment) which is configured to use models to produce an estimated event that has caused a given decision and to obtain or simulate sensing data which would have constituted the event. In an example, the model analysis technique described in R. Chen et al.: "Explaining Neural Networks Semantically and Quantitatively", 18 December 2018 (arXiv: 1812.07169v1 [cs.CV]) or other similar techniques may be used here.

Furthermore, the sensor selection algorithm 24 may be configured to select and/or construct witness devices from the set of potential sensors 14 based on their data streams. In an example, data comparison and data fusion techniques may be used here, such as a correlation discovery technique described in Y. Liang et al.: "Energy-efficient Collaborative Sensing: Learning the Latent Correlations of Heterogeneous Sensors", June 2021, ACM Transactions on Sensor Networks, Vol. 17, Issue 3, Art. No.: 33, pp 1-28.

Additionally, the witness device algorithm 26 may be configured to compare data from one or more of the selected sensors 140 to data requiring a witness from the primary device or model analysis module 22, and to output direct witness data (e.g., where it is above a correlation threshold) or a processed decision (e.g., "event witnessed", or "event not witnessed"). In an example, the witness device algorithm 26 may also implement a correlation discovery technique as described in Y. Liang et al.: "Energy-efficient Collaborative Sensing: Learning the Latent Correlations of Heterogeneous Sensors", June 2021, ACM Transactions on Sensor Networks, Vol. 17, Issue 3, Art. No.: 33, pp 1-28, but operating on data from the one or more selected sensors 140 rather than the potential sensors 14.

In another example, the witness device algorithm 26 may also implement data comparison techniques to quantify a degree of correlation between witness device data and the primary device data.

In a further example, the witness device algorithm may also implement data fusion techniques (e.g., for constructing of virtual devices from selected sensor data) as described e.g. in P. Mani et al.: "Ant Colony Inspired Machine Learning Algorithm for Identifying and Emulating Virtual Sensors", 2 November 2020, (arXiv:2011.00836v2 [cs.LG],).

Thus, the architecture of Fig. 1 allows, according to various embodiments, witnessing of events recorded by a primary sensor by any available device, without causing undue resource consumption, by a system which recruits (and where needed, configures) witness devices such that their recent past sensing data has maximum expected correlation to the event's data stream as recorded by the primary sensor (e.g., in the below first embodiment), or sub-sets of an overall data stream which are important for models (e.g., in the below second embodiment). The selected sensor(s) 140 may provide (a) witness device(s) by having sensed the same event as the primary device and may then further be checked over an upcoming time period to act as an external proof of e.g. correct functioning of the primary sensor or modelled data. Thus, the system may be considered to 'enable' the witness device(s) in that the recruiting may involve selecting, configuring or even performing discovery of such witness device(s).

Thus, by recruiting or creating witness devices based on their expected correlation to the sensed parameter of importance, the system becomes more robust to situations where a model relies on some unknown combination of data from different sensors, and/or where there is a risk of eavesdropping by falsely requesting witness data, and/or where no direct witness device is available, requiring a combination of inputs from several devices.

However, in an example, a selected sensor 140 that shows a high correlation (e.g., beyond a predefined threshold) may be marked as having a data feature in common with the primary sensor, which may reduce its probative value and may make the selected sensor 140 less reliable. For example, primary and witness sensors that are connected to the same mains network (power grid) may be highly correlated by receiving same spikes at the same time through their power supply circuits, regardless of the observed event. Such a marking may be considered during the witness device selection process.

According to various embodiments, a system for witness device discovery and selection is provided, in which potential witness devices (e.g., the selected sensors 140) are selected based on their ability to produce data with a high degree of correlation to a second input data stream (target date stream to be witnessed), wherein the selected witness devices may include a combination of devices.

In an embodiment, an input data stream may be derived from an analysis of a computed or modelled output (which may have been produced by a machine learning model), rather than raw data, wherein the analysis may be adapted to produce an estimate of a likely raw sensor data input which produced the modelled output, and/or wherein the analysis may be adapted to produce an estimated input which is not related to any single raw sensor data stream, but rather a combination.

In examples, embodiments may be used in a system for testing devices and/or models based one or more witness devices requested from a device discovery system according to embodiments.

At least some of the embodiments presented herein may be directed to using more than one witness device to record data about a given event (e.g., combining data from multiple witness devices) to e.g. increase the reliability of the system, and/or to recruit potential witness devices not only based on their location, availability, or according to some fixed policy, but also based on their ability to accurately sense data relating to the event to be witnessed. Virtual sensors may be created by grouping sensing data from several physical sensors, which sense aspects of the same shared event, and using data fusion techniques. Such data fusion techniques may involve a process of integrating multiple data sources to produce more consistent, accurate, and useful information than that provided by any individual data source.

Moreover, at least some of the embodiments presented herein may be configured to allow discovering witness devices in a network of heterogeneous sensors, where each sensor may only have a 'partial' view of the event and/or where sensors sense differing modalities. Furthermore, events of complex type (such as those used within machine learning models) can be witnessed, where it will not be obvious which single, fixed witness device is indeed relevant. Moreover, robust privacy provisions can be included, such as ensuring that the requester of witness data also themselves witnessed the event in question (to avoid eavesdropping). This can be done by having the device in question present a small data sample, which, if correlates, gives an indication of having witnessed the same event, and in this case, data can be shared.

In at least some embodiments, a dynamic learning process may be provided to discover which sensors in a group can produce data that correlates to another sensor's data, even when those sensors are of quite different types. The system may learn 'latent' correlations between the data streams from the various sensors.

In some embodiments, witness devices may be used to witness a signal that is being measured by a device. This can allow the hub to use the witness devices to measure a highly correlated signal with the one measured by the device, and this signal may then be used, e.g., to control the device. Such a technique may be applicable to cellular networks where usually a base station (hub) sets / selects communication parameters based solely on the measurements and indications of a given UE. Such measurement may be things like the channel state information measured by the UE and reported to the base station. Using witness devices may allow the base station to use an additional source of information to verify the reported measurements or work in absence of them and when they are of bad or low quality. For instance, a resource constrained device such as a passive IoT tag may be too resource constrained to make (accurate) measurements or report them. However, a close-by UE may be recruited as witness device and used to report measurements correlated with those of the passive IoT tag. This can allow the hub (base station) to better communicate with the passive IoT tag even if the passice IoT tag cannot actively communicate or its measurements are of low quality.

While many techniques are known for exploring neural networks, a quantitative system may be used (e.g., as described in the below second embodiment of Fig. 4), so that a (numerical) threshold may be assigned to the 'importance' of a given data stream. In an example, a secondary, explainable model may output a quantitative explanation for a target primary model.

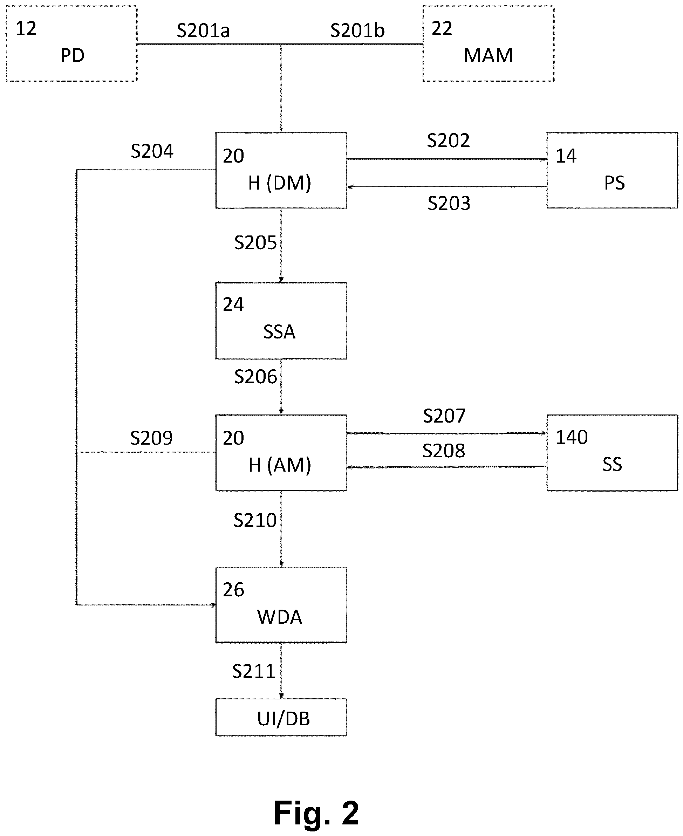

Fig. 2 schematically shows a process flow diagram of witness device discovery using the architecture of Fig. 1.

In initial steps S201a (related to the first embodiment of Fig. 4 below) resp. S201b (related to the second embodiment of Fig. 4 below), raw sensing data of a primary device (PD) 12 (first embodiment) or derived input data (e.g., derived from analysis of a model) of the module analysis module (MAM) 22 (second embodiment), respectively, to be witnessed and representing an event requiring a witness device, is sent to the hub (H) 20 (e.g., a cloud network controller or other central node). In response, the hub 20 may be set into a discovery mode (DM).

Then, the hub 20 requests in step S202 sensing data from the potential sensors (PS) 14, e.g., by sending a sensing data request that may include a look-back period and optional metadata relating to an observed event and/or other relevant parameters (e.g., user permissions, operational parameters, etc.).

In response, the hub 20 receives in step S203 sensing data obtained during the look-back period and optional metadata.

Furthermore, in step S204, the hub 20 forwards/inputs the data to be witnessed to the witness device algorithm (WDA) 26.

In step S205, the hub forwards/inputs the sensing data (candidate sensors' look-back data) received from the potential sensors 14 to the sensor selection algorithm (SSA) 24 which calculates correlations between the candidate sensors' look-back data and the data requiring a witness (which may happen on an individual sensor level, or by grouping together several potential sensors as candidate witness sensors).

Furthermore, the sensor selection algorithm of the hub 20 selects the best potential sensor(s) or sensor combination to become witness device(s) and outputs the result (e.g., the selected sensors 140 and correlations) to the hub 20 in step S206, wherein the hub 20 may now be set into an active mode (AM).

In some cases, the hub 20 may also instruct devices (e.g., a vacuum cleaner in a smart home or an unmanned aerial vehicle carrying a cellular base station with wireless communication/sensing capabilities) to get closer to the primary device so that the sensed measurements are correlated.

Then, in step S207, the hub 20 may send sensing data request(s) with control parameters to the selected sensors 140 to instruct the selected sensors 140 to maintain same settings for an upcoming 'witnessing' time period.

In response, the hub 20 may receive from the selected sensors 140 in step S208 sensing data obtained during the witness period.

Thereafter, in step S210, the hub 20 forwards/inputs the received sensing data of the witness period to the witness device algorithm 26.

Finally, in step S211, the witness device algorithm 26 outputs a witness result to a user (e.g., requester) via a suitable user interface UI (e.g., the user interface 28 of Fig. 1) or database (DB) (e.g., the witness device database 260 of Fig. 1). In an example, the sensing data received in step S203 from the selected sensors 140 of the potential sensors 14 during the look-back period and the sensing data received in step S208 from the selected sensors 140 during the witnessing time period may be returned to the user or may be output in a processed format (e.g., `event witnessed' or `event not witnessed').

The following embodiments relate to procedures for witness device discovery, selection and/or management.

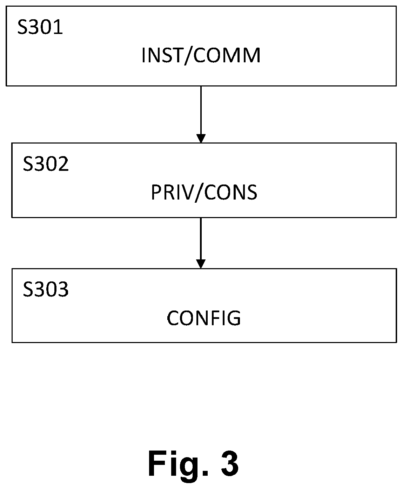

Fig. 3 schematically shows a flow diagram of a procedure for configuring a sensor as primary device or witness device in a sensor network according to various embodiments.

One or more of the following steps S301 to S303 may be executed one or more times with the purpose of configuring a sensor as a witness device in a sensor network (e.g., the sensor network 10 of Fig. 1).

In step S301 (INST/COMM), a user may install and commission a new device in the sensor network.

Then, in step S302 (PRIV/CONS), the new device is added to the sensor network (e.g., the sensor network 10 of Fig. 1) and a hub (e.g., the hub 20 of Fig. 1) may request the user to include privacy and/or user consent settings for the new device.

The requested privacy and/or user consent settings for the new device may refer to the availability of the new device to acts as a witness device, wherein the user may need to configure in step S303 (CONFIG) one or more of a type of device (e.g., primary device (e.g., the primary device 12 in Fig. 1) and/or witness device (e.g., the potential sensor 14 of Fig. 1), a type of sensor(s) that is/are available in the device, a type of data outputs that are available in the device, an applicable context (e.g., time, location, network where the device is connected to, content of the data output, emergency, etc.) for sharing (if configured as witness device) or receiving (if configures as primary device) data outputs, and/or primary devices that are allowed to receive a given data output of a witness device (which may refer to a specific device, a type of device, or devices in a given independent network). In some cases, the user consent privacy settings may be available as part of a subscriber profile (e.g., as in cellular networks). In some cases, the user consent / privacy settings may be configured agreed when installing and setting up an account in the hub of a smart home where the hub is in charge of the smart home devices where the account may be with an operator of a smart home environment.

The applicable context may comprise e.g. a rule that the data output may only be shared in a given context, e.g, a time period (between 8am and 8pm), and/or a location. For example, a rule might be that the data output of a vacuum cleaner may only be shared when the vacuum cleaner is on the ground floor (e.g., living room and kitchen) but not when it is in the first floor (e.g., bathroom and bedrooms). Another example might concern a connectivity mode - e.g., the data output may only be shared with devices in the same Wi-Fi^{™} network or in a 5G network but not in a 2G/3G/4G network). The rule may also be that the data may only be shared with given persons/roles (e.g., a rule that the data output may only be shared when no person is detected in the video output). It may also be that a rule relating to an overall context applies - e.g., a rule that previous rules may not apply in case of emergency (e.g., a scream/gunshot is detected, emergency button is pressed, etc.). It should understood that the rule may be a complex combination of various things like the examples above.

Other configuration parameters (e.g., location of devices) may also be estimated/configured.

In examples or specific cases, the above user configuration of step S303 may be automated, e.g., a device may have and/or store and/or access a (default) configuration with standard settings applicable to the device and may automatically apply this (default) configuration, or the hub may apply standard settings to the device where the standard settings may have been (pre-)configured by the user.

In other examples, the privacy and/or user consent settings may be configured in step S303 by means of a user interface (e.g., the user interface of an app and/or an operating system of a smart device and/or the hub (e.g., the user interface 28 of Fig. 1).

In further examples, the privacy and/or user consent settings may be configured in step S303 in different granularities, e.g., per device, per device type, per network, per user, or the like.

In still further examples, the privacy and/or user consent settings may be stored in the hub.

In still further examples, the privacy and/or user consent settings may be stored in the device (e.g., the primary device and/or the witness device) so that the settings can be taken into account during operation, e.g., in the embodiments described in connection with Fig. 4 below.

Fig. 4 schematically shows a flow diagram of procedure for witnessing a defined primary sensor according to first and second embodiments.

The procedure of Fig. 4 may be designed to enable witness data to be generated using multiple devices in a network, and even for complex inputs. The procedure may further be designed such that the hub (e.g., the hub 20 of Fig. 1) can choose a set of selected sensors (e.g., the selected sensors 140 of Fig. 1) from which to obtain witness device data after having examined a broader pool of potential candidates (e.g., the potential sensors 14 of Fig. 1), to strike a balance between a broad search for witness devices and placing undue burden on many sensors (e.g., as described below in connection with steps 402 and 404).

According to a first embodiment, a sensor is configured as a primary device to be witnessed.

One or more of the following steps S401 to S408 may be executed (e.g., by the hub 20 and at least some of its related modules/algorithm 22, 24, 26, 28 and the database 260 of Fig. 1) one or more times with the purpose of witnessing a defined primary sensor.

In step S401 (DI - WDA), data representing the event requiring a witness device is sent from a primary device (e.g., the primary device 12 of Fig. 1) to the hub (e.g., a network controller or other central device such as the hub 20 of Fig. 1). The data may be raw sensing data obtained from a target sensor or data derived from an analysis of a model, e.g., via the model analysis module 22 of Fig. 1. A request for a witness device may be generated and the data to be witnessed may be input to the sensor selection and witness device algorithms (e.g., the sensor selection algorithm 24 and the witness device algorithm 26 of Fig. 1) to serve as a basis for later comparison.

In an example, the request for a witness device may be generated by the primary device itself, e.g., according to a policy (such as requiring a witness for every n events) which may be configured by the hub or by a user, or as a result of sensing a type of data which is known or expected to be, e.g., sensitive in nature or faulty or incomplete, and would therefore benefit from an external check, or in response to a user request, or as a periodic test or calibration function.

The above last option may be especially relevant in cases where a primary device implements some local processing on its raw data, wherein such local processing may comprise local machine learning algorithms which are allowed for training purposes on the primary device. In such a case, the primary device may determine that it has been running unsupervised (i.e., gathering local training data) for too long and therefore requires an external check to make sure that its local model structure has not diverged too far from an allowable limit.

In another example, the request for a witness device may be generated by the hub proactively in a case where the hub implements a monitoring function and discovers discrepancies between sensors which were previously correlated, or reactively in the cases where the data of the primary device indicates an event which is estimated as `important' or sensitive in nature, or in response to a user request via the user interface.

Furthermore, the data to be witnessed may be sent to the hub in the form of raw data with a maximum sampling rate, precision etc. available to the primary device, and with no or minimal local processing carried out by the primary device. Thereby, chances of finding a correlated sensor in later steps can be maximized.

It is noted that using raw data of the event to be witnessed may enhance the overall security of the system by ensuring that any primary device can only request and receive witness data relating to events which it witnessed itself.

In examples, data may also be shared according to the privacy and/or user consent configurations described above in connection with Fig. 3.

In other examples, the hub may also receive or extract or estimate metadata including one or more of a location of the primary device and its estimated sensing range, sensing parameters used (e.g., energy, sensitivity, sensing type), and an estimated type or nature of the event and/or its time-position in the data stream (where the event has been sensed by the primary device). This metadata may also be received and/or extracted and/or estimated and/or configured in an initial configuration phase (e.g., as described above in connection with Fig. 4).

In examples, a close-by device may also trigger the request for a witness device, e.g., a device may offer itself to become a witness device of a primary device. For instance, a user equipment may send a request to become a witness device of an ambient IoT device so that communication with the ambient IoT device is facilitated by the measurements of the user equipment.

In step S402 (SEL PS), the hub may perform an initial filter operation on the whole sensor network to identify a subset of sensors that are expected to be good candidates for witness devices (e.g., the potential sensors 14 of Fig. 1).

The hub may also calculate a suitable look-back period, and optionally a suitable witnessing period, e.g., based on temporal dynamics of the data to be witnessed.

In examples, the potential sensors may be identified by one or more of their approximate location and sensing range that match those reported in the above metadata of step S401, their sensing type that matches that reported in the above metadata of step S401, the configuration data (e.g., as described in connection with Fig. 3 above), their non-rejection by the hub since their owner or user has given permission to act as witness devices, their availability to act as witness devices during the look-back period (and probably also during the witnessing period), i.e., they were not switched off or idle during the look-back period and they are not expected to be busy or heavily loaded during the witnessing period.

In some cases (e.g., where only one or a few potential sensors are identified), the set of potential sensors may directly be determined as selected sensors, and step S404 below may be skipped.

In examples, the look-back period may be calculated by examining temporal dynamics of the data (where no defined event is contained in the data to be witnessed, e.g., data which is collected at a high sample rate, and/or which changes rapidly, may need a shorter look-back period compared with data which changes more slowly, which determination can be made based on the chance of finding a random correlation (or a specific correlation) to the data in step S404 below, which may require a certain level of 'uniqueness' in the data), or by examining the period over which the event occurred plus suitable buffers (where a defined event is contained in the data to be witnessed). In both cases, the hub may be configured to set the look-back period as short as possible while achieving the above aims.

In examples, the hub may also take into account typical buffer lengths and/or memory capacity of itself and any potential or selected sensors to ensure that the data collected during the look-back period fits within the available memory space.

In other examples, a default look-back period may be configured or the look-back period may be calculated as described above during the configuration stage, e.g., as described in connection with Fig. 3 above.

Furthermore, in examples, the witnessing period may be calculated based on an expected repetition frequency of the events to maximize the chances that one occurs (where a future event is to be witnessed), and/or temporally dynamics of the data (where no defined Event is witnessed).

In other examples, a default witnessing period may be configured or the witnessing period may be calculated as described above during the configuration stage, e.g., as described in connection with Fig. 3 above.

In step S403 (REQ SD), the hub may request data from the potential sensors over the look-back period. Furthermore, the hub may optionally supply operating modes, provide coordination, and/or temporarily disable on-device processing of sensor data on the potential sensors, where required. At this stage, the coordination by the hub may aim at avoiding potential interference between the potential sensors and (optionally) ensuring similarity between the sensing mode employed by the potential sensors and that used by the primary device.

In step S404 (SD → SSA), the hub may input the sensing data from the potential sensors as collected during the look-back period to the sensor selection algorithm (e.g., the sensor selection algorithm 24 of Fig. 1) which may perform a second filter operation on the potential sensors to identify which sensors best correlate to the data to be witnessed. The selected sensor(s), any groupings, and their degree of correlation with the data to be witnessed is returned as an output to the hub. Where no good correlation is found, step S403 may be repeated using a wider pool of potential sensors and/or different operating modes or settings.

In examples, the sensor selection algorithm may compare the data from the primary sensor to data from all the potential sensors to discover correlations, e.g., by using the techniques described in Y. Liang et al.: "Energy-efficient Collaborative Sensing: Learning the Latent Correlations of Heterogeneous Sensors", June 2021, ACM Transactions on Sensor Networks, Vol. 17, Issue 3, Art. No.: 33, pp 1-.

In examples, the potential sensors may also be grouped and the comparison re-run against the groups, similar to virtual sensors as discussed in P. Mani et al.: "Ant Colony Inspired Machine Learning Algorithm for Identifying and Emulating Virtual Sensors", 2 November 2020, (arXiv:2011.00836v2 [cs.LG]).

In other examples, the sensor selection algorithm may be configured to calculate an expected degree of correlation between the potential sensors and the data from the primary device. It may then rank the potential sensors based on the degree of correlation and may select a minimum rank (number) as a threshold to become selected sensor such that there is a high correlation either from one selected sensor or as a group of selected sensors. In an example, the level of correlation that is considered 'high' may be set by a system policy. For example, if no sensor or group of sensors correlates above 50% with the data obtained from the primary device, the sensor selection algorithm may return a flag to the hub indicating that a wider pool of potential sensors is required.

At this stage, the aim of selecting a sub-set of the potential sensors may be that it allows a smaller pool of sensors to be controlled more closely by the hub, without placing undue burden on many potential sensors. For example, the hub may instruct a selected sensor to employ an advanced, computing- or energy-intensive processing technique to better witness an event, but it may well be impractical to ask many potential sensors to do so, or to commission such a sensor permanently to the sensor network. Where any such advanced modes are to be used, the above comparison, grouping and/or correlation steps may be re-run with those modes activated, to estimate a new degree of correlation with the primary device's data after the processing.

The hub may also configure a witness device with a schedule to perform and report sensed measurements. For instance, the schedule may relate to the timing in which the measurements need to be performed so that they match the measurements of the primary device and/or reported. The hub may also configure a witness device with configuration parameters and/or a specific model, e.g., an AI model that allow performing a better sensing for the specific type of primary device under consideration. For instance, if a specific type of ambient IoT device is to be witnessed, and it is desired to estimate how well the received signal by the ambient IoT device is, a close by user equipement may be configured with communication parameters (e.g., IoT device type) and/or AI model that allow the witness device to estimate the actual measurements of the primary device.

In an example, above comparison, grouping and/or correlation steps may (also) be carried out and/or configured during the initial configuration (e.g., as described in connection with Fig. 3 above) and/or a configuration obtained at a given point of time may also be stored so that it can be reused at a later point of time.

In step S405 (DLB - WDA), where no future witness period is required (e.g., to witness a discrete event in the past), the data obtained during the look-back period may be input directly to the witness device algorithm (e.g., the witness device algorithm of Fig. 1) which may then output a decision on whether the event has been witnessed. If necessary, the witness device algorithm may indicate to the hub that a different combination of sensors is needed, and steps S403 and S404 may be re-iterated.

In step S406 (COLL SD(WP)), where a future witnessing period is required (for example, to check correct functioning of a primary sensor or model), the hub may control the selected sensors to collect sensing data over the witnessing period, e.g., including providing orchestration, usage settings and control parameters. The sensing data obtained during the witnessing period is then returned by the selected sensors to the hub, e.g., as raw (unprocessed) data.

In step S407 (WDA → WR), the hub may input the data obtained in step S406 to the witness device algorithm, which compares it against the data from the primary sensor to be witnessed and outputs a witnessing result.

In examples, the witnessing result may include one or more of an indication that an event has been witnessed, a determined probability of a correct witnessed event, and data associated to the witnessed event from both the primary device and the witness device.

In examples, the witness device algorithm (witnessing algorithm) may use the correlation discovery technique described in Y. Liang et al.: "Energy-efficient Collaborative Sensing: Learning the Latent Correlations of Heterogeneous Sensors", June 2021, ACM Transactions on Sensor Networks, Vol. 17, Issue 3, Art. No.: 33, pp 1-28 for its comparison, or any suitable direct data comparison technique between the two data streams or data sets or outputs.

In other examples, the witnessing result may be generated based on a shared observation by the witness device and the primary device of one or more events during the look-back and/or witnessing periods. In this case, the event may be considered as 'witnessed' or `not witnessed', or the witness device algorithm may output a confidence score relating to the degree of correlation between the witness data and the primary device data during the event.

In further examples, the witnessing result may be generated based on a high degree of correlation between the witness data and the primary device's data during the look-back period which then continues during the witnessing period (implying that the primary device's observations during the look-back period were unlikely to be erroneous). This may be relevant to situations where the primary device is being tested, rather than witnessing of discrete events. In determining the degree of correlation required to constitute a successful test, the witness device algorithm may take into account the degree of correlation observed between the selected sensors and the primary device in step S404.

Where only a weak correlation is found, the witness device algorithm may indicate to the hub that additional witnessing data may be required from a potentially different set of potential and/or selected sensors, in which case steps S404, S405 and S406 may need to be re-iterated.

In some cases, the witness device may match whether its measurements are correlated with the ones of the primary device, and adapt its settings accordingly. In some cases, the primary device may report its measurements with low frequency (e.g., to reduce energy consumption) and rely on the measurements reported by the witness device for its operation.

Finally, in step S408 (WR → U), the witness result may be passed to the user via a user interface (e.g., the user interface 28 of Fig. 1) or may be stored in a witness device database (e.g., the witness device database 260 or sent to an application (e.g., an application performing operations, e.g., resource scheduling or message transmission, based on the witness result. Optionally, the set of potential sensor(s) and/or selected sensor(s) used by the witness device algorithm in steps S405 and S407 may be stored (persistently) in the witness device database to witness future events of similar type.

In a variant of this embodiment, the collected data may be used to train AI/ML models that may be configured in witness devices to improve the witness capabilities of different types of primary devices.

In a variant of the first embodiment, the primary device may contact potential witness devices in step S402, and if authorized, selected witness devices may share their data.

The following second embodiment (model analysis) allows a witness device to be identified for events which do not come from one specific primary sensor but instead relate to the output of a model. This may be, for example, a machine learning model which receives its input data from one or more primary sensors and outputs a decision or other processing of that data (although, this is not limited to machine learning models specifically). For instance, it may be a machine learning model running on a device and taking a video stream as input and capable of detecting events such as the presence or scream of a person.

The procedure of the second embodiment is similar to the above procedure of the first embodiment, except for step S401 where, instead of inputting raw data from a primary sensor, the model analysis module analyses an output of a relevant model (which may be a machine learning model or otherwise - i.e., the "target model") to identify a calculated, effective data stream (the "effective raw data") which requires a witness device.

In an example, the effective raw data may relate to an estimated or calculated input of raw data from a primary sensor to the target model (which may also be a "model"). E.g., where the target model is a more straightforward data analysis model (such as averaging, data fusion, etc.), the model analysis module may examine its output and use its knowledge of the target model's structure and function to reverse that output (assuming that a reversible transformation is applied by the target model) to one or more expected inputs. These expected inputs are labelled as the effective raw data and used in the main method in place of the raw data from the primary sensor.

In another example, the effective raw data may relate to data which does not necessarily match to any primary sensor, but instead has been identified by the model analysis module as being likely to have high importance in triggering the target model to produce the observed output. This might be especially relevant, for example, where the target model implements more complex analysis techniques including machine learning. In this case, the model analysis module attempts to identify data streams which, if they had been observed, are likely to have caused the output or decision which was given by the target model.

For example, in the case of identifying a data stream relevant to a target model which is a neural network, the model analysis module may implement a technique, such as that described in R. Chen et al.: "Explaining Neural Networks Semantically and Quantitatively", 18 December 2018 (arXiv: 1812.07169v1 [cs.CV]), to analyze which inputs have a high importance to the specific decision of the target model. For those inputs, the model analysis module may directly receive (e.g., via querying the target model) or simulate a data stream which would cause a high activation on that input, leading to the observed decision.

In examples, to simulate the data stream, the model analysis module may create synthetic data and query (a copy of) the target model with it, until a form of synthetic data is found which has similar importance and causes similar activations within and decisions of the target model. Such synthetic data can then be used as a proxy for the effective raw data (even though it is not raw data itself).

It is noted that it is not necessary that the model analysis module can 'unwind' the target model to the level of individual sensors. Rather, only such specific data streams may need to be identified, which enable a correlation to be found among other, external sensors or sensor groups.

Furthermore, the received or calculated data may be marked as the effective raw data and passed to the hub as input to the main procedure, which proceeds as described above in connection with steps S402 to S408 the first embodiment of Fig. 4, attempting to identify correlations from sensors within the sensor network to this effective raw data.

Or alternatively, the effective raw data may refer to output data generated by the machine learning model when taking as input the raw data of one or more primary devices. In this case, it may be desired to verify (e.g., by means of a witness device) whether the effective raw data is accurate.

A use case example of the above embodiments relates to digital biomarkers that use sensor data, processed through a model, to output health-related parameters. In such digital biomarkers, the used models may be complex and the nature of the measurements taken by the sensing devices are becoming increasingly uncorrelated from those used in traditional biomarkers. Under such conditions, a single faulty sensor reading may lead to a disproportionate impact on the accuracy of a digital biomarker and it will be difficult to know what parameter to sense if an external check (i.e., witness device) is required.

For example, a digital biomarker may be based on a combination of temperature, accelerometer, and RF sensors, and a witness device may need to be identified or constructed from other sensors that have good degree of correlation with the multimodal data. Furthermore, the importance of any one of these parameters to a model may not be obvious. Witnessing such events therefore represents a valuable use case of the proposed invention, in particular the above second embodiment.

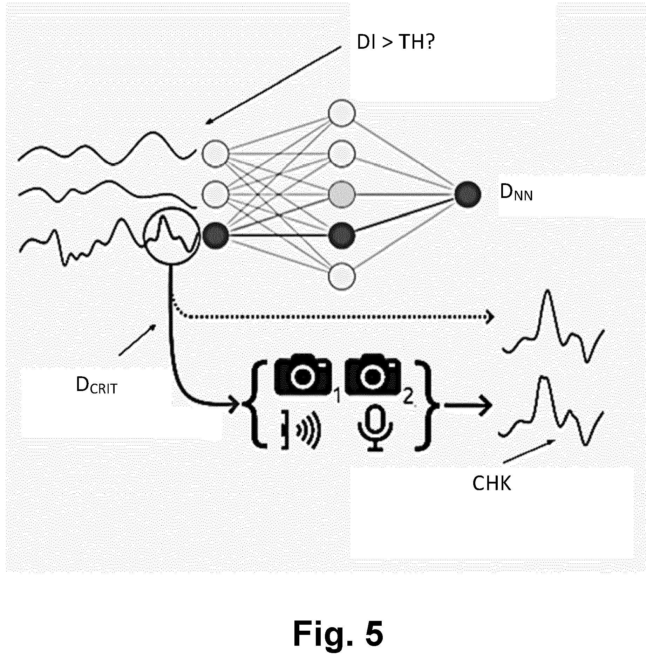

Fig. 5 schematically shows an exemplary use case of the witness device discovery process, according to an embodiment.

It is assumed that a room is equipped with multiple passive infrared (PIR) sensors and a machine learning model (MLM A), e.g., a neural network, may be used for people counting based on raw data obtained from the PIR sensors.

The effective raw data may be the number of people as a function of time, as indicated in Fig. 5 by the three waveforms in the lefthand portion.

The MLM A may be configured to detect input data (e.g., waveform amplitudes) that exceed a predetermined threshold relevant for decisions. The dark circles in the network layers of the neural network of MLM A indicate a path of activated neuronal nodes that lead to an output of a decision D_{NN} (e.g., a detected person in the room).

The procedure of the above first and second embodiments may now be used to derive critical raw data D_{CRIT} (e.g., PIR sensor data portion) at the input of MLM A and to correlate the critical raw data D_{CRIT} with sensing data of one or more witness devices selected from potential sensors or sensor groups (e.g., first and second cameras 1 and 2, a movement detector, and a microphone located in the room, as shown in Fig. 5). The potential sensors or sensor groups are capable of generating well-correlated data that can be used to check the measurement (e.g., over the next few seconds).

A witness device that may have been selected by the procedure of Fig. 4 may be one of the first and second cameras, that (running another machine learning model (MLM B)) also outputs the number of people in the room.

By correlating the derived critical data D_{CRIT} to related sensing data obtained from the witness device, it is possible to verify by means of the camera device (and MLM B) that the number of people counted by means of MLM A and the PIR sensors is accurate.

To summarize, a system and method have been described for recruiting or creating one or more witness devices such that their recent past sensing data has maximum expected correlation to a sensed parameter of importance (e.g., an event's data stream) as recorded by a primary sensor and/or to sub-sets of an overall data stream which are important for models. Thereby, robustness can be increased in situations where a model relies on some unknown combination of data from different sensors, or where there is a risk of eavesdropping by falsely requesting witness data, or where no direct witness device is available and a combination of inputs from several devices is required.

While the invention has been illustrated and described in detail in the drawings and foregoing description, such illustration and description are to be considered illustrative or exemplary and not restrictive. The invention is not limited to the disclosed embodiments. It can be applied to various types of mobile devices, such as mobile phone, vital signs monitoring/telemetry devices, smartwatches, detectors, vehicles (for vehicle-to-vehicle (V2V) communication or more general vehicle-to-everything (V2X) communication), V2X devices, Internet of Things (IoT) hubs, IoT devices, including low-power medical sensors for health monitoring, medical (emergency) diagnosis and treatment devices, for hospital use or first-responder use, virtual reality (VR) headsets, etc.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B.

At least some steps of the described operations like those indicated in Figs. 3 and 4 can be implemented as program code means of at least one computer program and/or as dedicated hardware of the related network device or function, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. An apparatus for enabling a witness device (140) used for performing at least one of verifying, replacing and complementing input data derived from a primary data generating device (12) or from an analysis by use of a model, the apparatus being adapted to select the witness devices (140) from potential data generating devices (14) based on a degree of correlation between witness data generated by the potential data generating devices (14) and the input data.

2. The apparatus of claim 1 wherein the correlation is evaluated over a predetermined look-back time period.

3. The apparatus of claim 1, wherein the apparatus comprises a model analysis module (22) adapted to derive the input data from an analysis of a computed or modelled output, in particular an output produced by a machine learning model.

4. The apparatus of claim 1 or 2, wherein the model analysis module (22) is configured to use a model to produce an estimated event that has caused a given decision and to obtain or simulate sensing data which would have constituted the event.

5. The apparatus of any one of the preceding claims, wherein the model analysis module (22) is adapted to produce an estimate of a raw sensor data input or a combination of raw sensor data inputs, that produced the computed or modelled output.

6. The apparatus of any one of the preceding claims, wherein the apparatus is adapted to enable the witness device (140) such that their witness data has a correlation above a threshold to an event's data stream as recorded by the primary data generating device (12), or one or more sub-sets of an overall data stream.

7. The apparatus of any one of the preceding claims, wherein the apparatus is adapted to analyze witness data generated by the selected witness devices (140) over an upcoming time period to check a correct functioning of the primary data generating device (12) or a target model or the witness device.

8. The apparatus of any one of the preceding claims, wherein the apparatus is adapted to create virtual sensors by grouping sensing data from one or more physical sensors (14), which sense aspects of a shared event, and using data fusion techniques.

9. The apparatus of any one of the preceding claims, wherein the apparatus is adapted to configure or request a user or a network function to configure for a new data generating device (14),
- one or more of a type of device,
- a type of sensor or sensors that is/are available in the new data generating device (14),
- a type of data outputs that are available in the new data generating device (14), and
- an applicable context for sharing or receiving data outputs.

10. The apparatus of any one of the preceding claims, wherein the apparatus is adapted to perform at least one of receiving, transmitting, extracting and estimating metadata including one or more of:
- a location of the primary data generating device (12)
- an estimated sensing range of the primary data generating device (12),
- a sensing parameters of the primary data generating device (12),
- an estimated type or nature of an event to be witnessed and/or,
- a time-position in a data stream of the input data of the primary data generating device (12),
- configuration parameters for a witness device,
- an AI/ML model for the witness device, and
- sensing range, parameters, and schedule for the witness device.

11. The apparatus of any one of the preceding claims, wherein the apparatus is adapted to identify or select or configure the potential data generating devices (14) by one or more of:
- their approximate location and sensing range,
- their sensing type,
- their configuration data,
- their permission to act as witness devices, and
- their availability to act as witness devices during the look-back period.

12. A hub (20) comprising an apparatus of any one of claims 1 to 10.

13. A system for
- testing devices and/or models and/or
- supporting devices in their sensing/communication tasks based on requesting witness devices (140) from the hub (20) of claim 11.

14. A method of selecting witness devices for verifying, replacing or complementing input data derived from a primary data generating device (12), the method comprising selecting the witness devices from potential data generating devices (14) based on a degree of correlation between witness data generated by the potential data generating devices (14) and the input data.

15. The method of claim 14, further comprising:
calculating correlations between the witness data of the potential data generating devices (14) and the input data on a level of an individual device or a level of a group of devices;
selecting potential data generating devices (14) or combinations of potential data generating devices (14) as the witness devices (140);
instructing the selected witness devices (140) to maintain their settings for an upcoming witnessing time period; and
outputting data obtained from the selected witness devices (140) during the predetermined look-back time period and the witnessing time period via a user interface (28) or a database (260).

16. A computer program product comprising code means for producing the step of claim 14 or 15 when run on a computer device.
